# EUROPÄISCHE PATENTSCHRIFT

(11) **EP 4 076 854 B1**
(45) Veröffentlichungstag und Bekanntmachung des Hinweises auf die Patenterteilung: **24.04.2024**
(21) Anmeldenummer: 20820218.4
(22) Anmeldetag: 10.12.2020
(51) Int. Cl.: B25C 1/06, H02K 11/00, H02K 33/00

(54) **ARBEITSGERÄT**
WORKING IMPLEMENT
APPAREIL DE TRAVAIL

(30) Priorität: 20.12.2019 EP 19218893
(43) Veröffentlichungstag der Anmeldung: 26.10.2022
(73) Patentinhaber: Hilti Aktiengesellschaft, 9494 Schaan (LI)
(72) Erfinder: ABU ANTOUN, Chafic, 9470 Buchs (CH); DITTRICH, Tilo, 6800 Feldkirch (AT); BINDER, Albert, 9470 Buchs (CH); GUT, Manuel, 6811 Göfis (AT); SCHMID, Florian, 9470 Buchs SG (CH)
(74) Vertreter: Hilti Aktiengesellschaft Corporate Intellectual Property
(86) Internationale Anmeldenummer: PCT/EP2020/085592
(87) Internationale Veröffentlichungsnummer: WO 2021/122325

(56) Entgegenhaltungen:
- WO-A1-2019/211264
- WO-A1-2019/233845

## Beschreibung

Die vorliegende Erfindung betrifft ein Arbeitsgerät, wie beispielsweise ein Setzgerät zum Eintreiben von Befestigungselementen in einen Untergrund.

Derartige Arbeitsgeräte weisen oft einen Arbeitskolben auf, welcher dafür vorgesehen ist, sich entlang einer Arbeitsachse zu bewegen. Angetrieben wird der Arbeitskolben von einem Antrieb, welcher den Arbeitskolben beschleunigt. Die WO 2018/104406 A1 beschreibt einen Antrieb, welcher einen elektrischen Kondensator, einen an dem Arbeitskolben angeordneten Kurzschlussläufer und eine Erregerspule aufweist, welche bei einer Schnellentladung des Kondensators mit Strom durchflossen wird und ein Magnetfeld erzeugt, um den Arbeitskolben zu beschleunigen.

Setzgeräte weisen üblicherweise eine Aufnahme für ein Befestigungselement auf, aus welcher heraus ein darin aufgenommenes Befestigungselement entlang einer Arbeitsachse in den Untergrund befördert wird. Das Arbeitselement wird hierfür von dem Antrieb entlang der Arbeitsachse auf das Befestigungselement zu angetrieben. Aus der US 6,830,173 B2 ist ein Setzgerät mit einem Antrieb bekannt, welcher einen elektrischen Kondensator und eine Spule aufweist. WO 2019/211264 A1 offenbart ein Arbeitsgerät nach dem Oberbegriff von Anspruch 1.

Die Aufgabe der vorliegenden Erfindung liegt darin, ein Setzgerät der vorgenannten Art bereitzustellen, bei dem ein hoher Wirkungsgrad und/oder eine gute Setzqualität gewährleistet ist.

Die Aufgabe ist gelöst bei einem vorzugsweise handgeführten Arbeitsgerät zum Bearbeiten eines Untergrunds, aufweisend einen Stator und einen Arbeitskolben, welcher dafür vorgesehen ist, sich relativ zu dem Stator entlang einer Arbeitsachse zu bewegen, weiterhin aufweisend einen Antrieb, welcher dafür vorgesehen ist, den Arbeitskolben von einer Startposition aus entlang der Arbeitsachse auf den Untergrund zu anzutreiben, wobei der Stator einen ersten elektrischen Statorkontakt aufweist und der Arbeitskolben einen an dem ersten elektrischen Statorkontakt gleitenden ersten elektrischen Kolbenkontakt aufweist, welcher an einem bezüglich der Arbeitsachse radial äusseren Umfang des Arbeitskolbens angeordnet ist, und wobei der Antrieb eine an dem Arbeitskolben angeordnete Kolbenspule aufweist, welche dafür vorgesehen ist, mittels des ersten elektrischen Statorkontakts und des ersten elektrischen Kolbenkontakts mit Strom durchflossen zu werden und ein Magnetfeld zu erzeugen.

Eine vorteilhafte Ausgestaltung ist dadurch gekennzeichnet, dass der erste elektrische Kolbenkontakt eine erste Kontaktschiene umfasst, wobei der erste elektrische Statorkontakt einen ersten Schleifkontakt umfasst. Eine alternative Ausgestaltung ist dadurch gekennzeichnet, dass der erste elektrische Statorkontakt eine erste Kontaktschiene umfasst, und wobei der erste elektrische Kolbenkontakt einen ersten Schleifkontakt umfasst. Bevorzugt umfasst der erste Schleifkontakt eine Kontaktbürste oder einen Schleifring.

Eine vorteilhafte Ausgestaltung ist dadurch gekennzeichnet, dass der Stator einen zweiten elektrischen Statorkontakt aufweist und der Arbeitskolben einen an dem zweiten elektrischen Statorkontakt gleitenden zweiten elektrischen Kolbenkontakt aufweist, welcher an einem bezüglich der Arbeitsachse radial äusseren Umfang des Arbeitskolbens angeordnet ist. Bevorzugt umfasst der zweite elektrische Kolbenkontakt eine zweite Kontaktschiene, wobei der zweite elektrische Statorkontakt einen zweiten Schleifkontakt umfasst. Alternativ umfasst der zweite elektrische Statorkontakt eine zweite Kontaktschiene, wobei der zweite elektrische Kolbenkontakt einen zweiten Schleifkontakt umfasst. Bevorzugt umfasst der zweite Schleifkontakt eine Kontaktbürste oder einen Schleifring.

Eine vorteilhafte Ausgestaltung ist dadurch gekennzeichnet, dass der Antrieb einen Kondensator aufweist. Bevorzugt ist die Kolbenspule mittels des ersten elektrischen Statorkontakts und des ersten elektrischen Kolbenkontakts elektrisch mit dem Kondensator verbindbar, um bei einer Schnellentladung des Kondensators mit Strom durchflossen zu werden und das Magnetfeld zu erzeugen, welches den Arbeitskolben relativ zu dem Stator beschleunigt. Besonders bevorzugt stösst das Magnetfeld den Stator ab. Ebenfalls bevorzugt weist der Antrieb eine an dem Stator angeordnete Statorspule auf, welche elektrisch mit dem Kondensator verbindbar ist, um bei einer Schnellentladung des Kondensators mit Strom durchflossen zu werden und ein Magnetfeld zu erzeugen, welches den Arbeitskolben relativ zu dem Stator beschleunigt. Besonders bevorzugt stösst das Magnetfeld den Stator ab.

Bevorzugt weist die Kolbenspule eine Kolbenspulenachse auf und die Statorspule eine Statorspulenachse, welche parallel zur Kolbenspulenachse orientiert ist. Besonders bevorzugt fällt die Statorspulenachse mit der Kolbenspulenachse zusammen. Besonders bevorzugt werden die Kolbenspule und die Statorspule bei der Schnellentladung des Kondensators gegensinnig mit Strom durchflossen, um einander entgegengesetzte Magnetfelder zu erzeugen.

Eine vorteilhafte Ausgestaltung ist dadurch gekennzeichnet, dass der Stator eine Vertiefung aufweist, in welche der Arbeitskolben in der Startposition eintaucht, wobei die Statorspule in der Startposition des Arbeitskolbens teilweise oder vollständig in der Vertiefung angeordnet ist. Bevorzugt ist der erste elektrische Kolbenkontakt in der Startposition des Arbeitskolbens ausserhalb der Vertiefung angeordnet.

Eine vorteilhafte Ausgestaltung ist dadurch gekennzeichnet, dass der erste elektrische Kolbenkontakt bezüglich der Arbeitsachse radial ausserhalb eines äusseren Umfangs der Kolbenspule angeordnet ist. Eine weitere vorteilhafte Ausgestaltung ist dadurch gekennzeichnet, dass der erste elektrische Kolbenkontakt bezüglich der Arbeitsachse axial vor der Kolbenspule und/oder vor dem Stator angeordnet ist.

Eine vorteilhafte Ausgestaltung ist dadurch gekennzeichnet, dass der Antrieb eine erste Feder aufweist, welche den ersten Statorkontakt auf den ersten Kolbenkontakt zu oder den ersten Kolbenkontakt auf den ersten Statorkontakt zu belastet. Eine weitere vorteilhafte Ausgestaltung ist dadurch gekennzeichnet, dass der Antrieb eine zweite Feder aufweist, welche den zweiten Statorkontakt auf den zweiten Kolbenkontakt zu oder den zweiten Kolbenkontakt auf den zweiten Statorkontakt zu belastet.

Eine vorteilhafte Ausgestaltung ist dadurch gekennzeichnet, dass das Arbeitsgerät als Setzgerät zum Eintreiben von Befestigungselementen in einen Untergrund ausgebildet ist, aufweisend eine Aufnahme, welche dafür vorgesehen ist, ein Befestigungselement aufzunehmen, wobei der Arbeitskolben oder der Stator dafür vorgesehen ist, ein in der Aufnahme aufgenommenes Befestigungselement entlang der Arbeitsachse in den Untergrund zu befördern, und wobei der Antrieb dafür vorgesehen ist, den Arbeitskolben entlang der Arbeitsachse auf das Befestigungselement zu anzutreiben.

Unter einem Kondensator im Sinne der Erfindung ist ein elektrisches Bauelement zu verstehen, welches elektrische Ladung und die damit verbundene Energie in einem elektrischen Feld speichert. Insbesondere weist ein Kondensator zwei elektrisch leitende Elektroden auf, zwischen denen sich das elektrische Feld aufbaut, wenn die Elektroden elektrisch unterschiedlich geladen werden. Unter einem Befestigungselement im Sinne der Erfindung ist beispielsweise ein Nagel, ein Stift, eine Klammer, ein Clip, ein Bolzen, insbesondere Gewindebolzen oder dergleichen zu verstehen.

Unter einem weichmagnetischen Material im Sinne der Erfindung ist ein Material zu verstehen, welches eine hohe magnetische Sättigungsflussdichte und insbesondere eine kleine Koerzitivfeldstärke aufweist und somit ein das Material durchsetzendes Magnetfeld verstärkt. Insbesondere weist das weichmagnetische Material des Statorrahmens und/oder des Kolbenrahmens eine Sättigungsflussdichte von mindestens 1,0 T, bevorzugt mindestens 1,3 T, besonders bevorzugt mindestens 1,5 T, auf. Unter einem elektrisch leitenden Material im Sinne der Erfindung ist ein Material zu verstehen, welches eine hohe spezifische elektrische Leitfähigkeit aufweist, so dass ein das Material durchsetzendes Magnetfeld in dem Material Wirbelströme erzeugt. Ein weichmagnetisches und/oder elektrisch leitendes Material besteht bevorzugt aus einem ferromagnetischen Material, besonders bevorzugt aus einem ferromagnetischen Metall, beispielsweise Eisen, Kobalt, Nickel, oder einer Legierung mit einem oder mehreren ferromagnetischen Metallen als Hauptbestandteil.

In den Zeichnungen ist die Erfindung in mehreren Ausführungsbeispielen dargestellt.

Es zeigen:
- Fig. 1: ein Arbeitsgerät in einem Längsschnitt,
- Fig. 2: eine Antrieb-Arbeitskolben-Einheit eines Arbeitsgeräts,
- Fig. 3: einen Antrieb eines Arbeitsgeräts,
- Fig. 4: eine Auftragung einer Antriebskraft über eine Zeit,
- Fig. 5: eine Auftragung einer Antriebskraft über einen Weg eines Arbeitskolbens
- Fig. 6: einen Antrieb eines Arbeitsgeräts in einem Längsschnitt, und
- Fig. 7: den Antrieb aus Fig. 6 in einer Aufsicht.

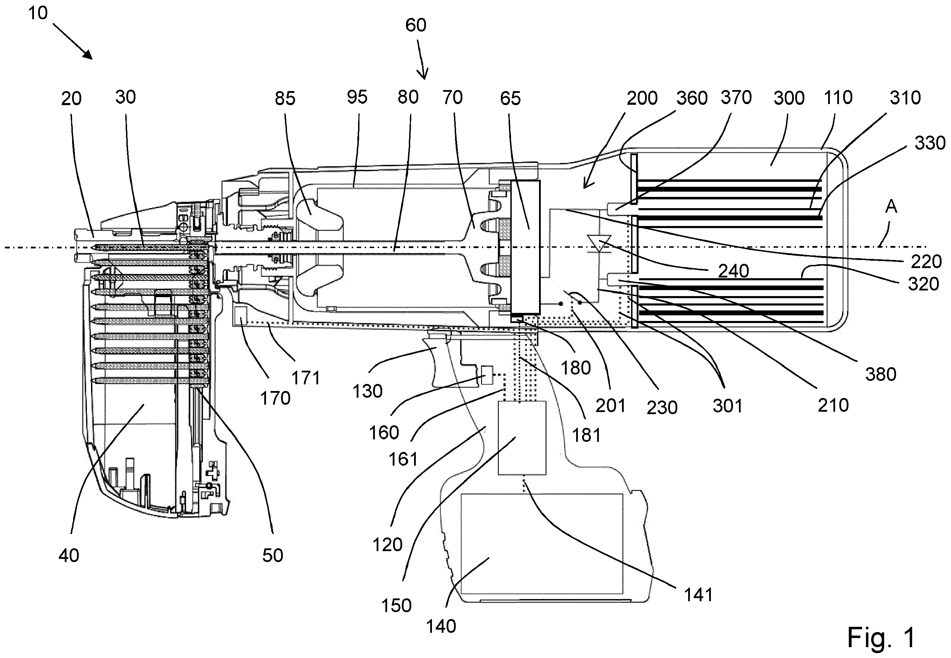

In Fig. 1 ist ein Arbeitsgerät 10 zum Bearbeiten eines nicht gezeigten Untergrunds in einem Längsschnitt dargestellt, welches als handgeführtes Setzgerät zum Eintreiben von Befestigungselementen in den Untergrund ausgebildet ist. Das Arbeitsgerät 10 weist eine als Bolzenführung ausgebildete Aufnahme 20 auf, in welcher ein als Nagel ausgebildetes Befestigungselement 30 aufgenommen ist, um entlang einer Arbeitsachse A in den Untergrund eingetrieben zu werden (in Fig. 1 nach links). Für eine Zuführung von Befestigungselementen zu der Aufnahme umfasst das Arbeitsgerät 10 ein Magazin 40, in welchem die Befestigungselemente einzeln oder in Form eines Befestigungselementestreifens 50 magaziniert aufgenommen sind und nach und nach in die Aufnahme 20 transportiert werden. Das Magazin 40 weist dafür ein nicht näher bezeichnetes federbeaufschlagtes Vorschubelement auf.

Das Arbeitsgerät 10 weist einen Arbeitskolben 60 auf, welcher einen Kolbenteller 70 und eine Kolbenstange 80 umfasst. Der Arbeitskolben 60 ist dafür vorgesehen, das Befestigungselement 30 aus der Aufnahme 20 heraus entlang der Arbeitsachse A in den Untergrund zu befördern. Hierbei ist der Arbeitskolben 60 mit seinem Kolbenteller 70 in einem Führungszylinder 95 entlang der Arbeitsachse A geführt. Bei nicht gezeigten Ausführungsbeispielen ist der Arbeitskolben von zwei, drei oder mehr Führungselementen, beispielsweise Führungsstangen entlang der Arbeitsachse geführt. Der Arbeitskolben 60 wird seinerseits von einem Antrieb 65 angetrieben, welcher einen Schaltkreislauf 200 und einen Kondensator 300 umfasst. Der Schaltkreislauf 200 ist dafür vorgesehen, eine elektrische Schnellentladung des zuvor aufgeladenen Kondensators 300 herbeizuführen und den dabei fliessenden Entladestrom dem Antrieb 65 zuzuführen.

Das Arbeitsgerät 10 umfasst weiterhin ein Gehäuse 110, in welchem der Antrieb 65 aufgenommen ist, einen Griff 120 mit einem als Abzug ausgebildeten Betätigungselement 130, einen als Akkumulator ausgebildeten elektrischen Energiespeicher 140, eine Steuereinheit 150, einen Auslöseschalter 160, einen Anpressschalter 170, einen an dem Antrieb 65 angeordneten Temperatursensor 180 und elektrische Verbindungsleitungen 141, 161, 171, 181, 201, 301, welche die Steuereinheit 150 mit dem elektrischen Energiespeicher 140, dem Auslöseschalter 160, dem Anpressschalter 170, dem Temperatursensor 180, dem Schaltkreislauf 200 beziehungsweise dem Kondensator 300 verbinden. Bei nicht gezeigten Ausführungsbeispielen wird das Arbeitsgerät 10 anstelle des elektrischen Energiespeichers 140 oder zusätzlich zu dem elektrischen Energiespeicher 140 mittels eines Netzkabels mit elektrischer Energie versorgt. Die Steuereinheit umfasst elektronische Bauteile, vorzugsweise auf einer Platine miteinander zu einem oder mehreren Steuerstromkreisen verschaltet, insbesondere einen oder mehrere Mikroprozessoren.

Wenn das Arbeitsgerät 10 an einen nicht gezeigten Untergrund (in Fig. 1 nach links) angepresst wird, betätigt ein nicht näher bezeichnetes Anpresselement den Anpressschalter 170, welcher dadurch mittels der Verbindungsleitung 171 ein Anpresssignal an die Steuereinheit 150 überträgt. Davon ausgelöst leitet die Steuereinheit 150 einen Kondensator-Aufladevorgang ein, bei welchem elektrische Energie mittels der Verbindungsleitung 141 von dem elektrischen Energiespeicher 140 zu der Steuereinheit 150 und mittels der Verbindungsleitungen 301 von der Steuereinheit 150 zu dem Kondensator 300 geleitet wird, um den Kondensator 300 elektrisch aufzuladen. Die Steuereinheit 150 umfasst hierzu einen nicht näher bezeichneten Schaltwandler, welcher den elektrischen Strom aus dem elektrischen Energiespeicher 140 in einen geeigneten Ladestrom für den Kondensator 300 umwandelt. Wenn der Kondensator 300 aufgeladen und der Arbeitskolben 60 in seiner in Fig. 1 dargestellten setzbereiten Position ist, befindet sich das Arbeitsgerät 10 in einem setzbereiten Zustand. Dadurch, dass die Aufladung des Kondensators 300 erst durch das Anpressen des Arbeitsgeräts 10 an den Untergrund bewirkt wird, ist zur Erhöhung der Sicherheit von umstehenden Personen ein Setzvorgang nur dann ermöglicht, wenn das Arbeitsgerät 10 an den Untergrund angepresst ist. Bei nicht gezeigten Ausführungsbeispielen leitet die Steuereinheit den Kondensator-Aufladevorgang bereits bei einem Einschalten des Arbeitsgeräts oder bei einem Abheben des Arbeitsgeräts von dem Untergrund oder bei Beendigung eines vorausgegangenen Eintreibvorgangs ein.

Wenn bei setzbereitem Arbeitsgerät 10 das Betätigungselement 130 betätigt wird, beispielsweise durch Ziehen mit dem Zeigefinger der Hand, welche den Griff 120 umgreift, betätigt das Betätigungselement 130 den Auslöseschalter 160, welcher dadurch mittels der Verbindungsleitung 161 ein Auslösesignal an die Steuereinheit 150 überträgt. Davon ausgelöst leitet die Steuereinheit 150 einen Kondensator-Entladevorgang ein, bei dem in dem Kondensator 300 gespeicherte elektrische Energie mittels des Schaltkreislaufs 200 von dem Kondensator 300 zu dem Antrieb 65 geleitet wird, indem der Kondensator 300 elektrisch entladen wird.

Der in Fig. 1 schematisch dargestellte Schaltkreislauf 200 umfasst hierzu zwei Entladeleitungen 210, 220, welche den Kondensator 300 mit dem Antrieb 65 verbinden und von denen zumindest eine Entladeleitung 210 von einem normalerweise geöffneten Entladeschalter 230 unterbrochen ist. Der Schaltkreislauf 200 bildet mit dem Antrieb 65 und dem Kondensator 300 unter Umständen einen elektrischen Schwingkreis. Ein Hin- und Herschwingen dieses Schwingkreises und/oder ein negatives Aufladen des Kondensators 300 wirkt sich unter Umständen negativ auf einen Wirkungsgrad des Antriebs 65 aus, lässt sich aber mit Hilfe einer Freilaufdiode 240 unterbinden. Die Entladeleitungen 210, 220 sind mittels an einer der Aufnahme 20 zugewandten Stirnseite 360 des Kondensators 300 angeordneter elektrischer Kontakte 370, 380 des Kondensators 300 elektrisch mit jeweils einer auf einer Trägerfolie 330 angeordneten Elektrode 310, 320 des Kondensators 300 verbunden, beispielsweise durch Verlöten, Verschweissen, Verschrauben, Verklemmen oder Formschluss. Der Entladeschalter 230 eignet sich vorzugsweise zum Schalten eines Entladestroms mit hoher Stromstärke und ist beispielsweise als Thyristor ausgebildet. Ausserdem haben die Entladeleitungen 210, 220 einen geringen Abstand zueinander, damit ein von ihnen induziertes parasitäres Magnetfeld möglichst gering ist. Beispielsweise sind die Entladeleitungen 210, 220 zu einer Sammelschiene ("Bus Bar") zusammengefasst und mit einem geeigneten Mittel, beispielsweise einem Halter oder einer Klammer, zusammengehalten. Bei nicht gezeigten Ausführungsbeispielen ist die Freilaufdiode elektrisch parallel zu dem Entladeschalter geschaltet. Bei weiteren nicht gezeigten Ausführungsbeispielen ist keine Freilaufdiode in dem Schaltkreis vorgesehen.

Zur Einleitung des Kondensator-Entladevorgangs schliesst die Steuereinheit 150 mittels der Verbindungsleitung 201 den Entladeschalter 230, wodurch ein Entladestrom des Kondensators 300 mit hoher Stromstärke durch den Antrieb 65 fliesst, welcher den Arbeitskolben 60 auf die Aufnahme 20 sowie das darin aufgenommene Befestigungselement 30 zu antreibt. Sobald die Kolbenstange 80 des Arbeitskolbens 60 auf einen nicht näher bezeichneten Kopf des Befestigungselements 30 trifft, wird das Befestigungselement 30 von dem Arbeitskolben 60 in den Untergrund eingetrieben. Überschüssige Bewegungsenergie des Arbeitskolbens 60 wird von einem Bremselement 85 aus einem federelastischen und/oder dämpfenden Material, beispielsweise Gummi oder einem Elastomer, aufgenommen, indem sich der Arbeitskolben 60 mit seinem Kolbenteller 70 gegen das Bremselement 85 bewegt und von diesem bis zu einem Stillstand abgebremst wird. Danach wird der Arbeitskolben 60 von einer nicht näher bezeichneten Rückstellvorrichtung in die setzbereite Position zurückgestellt.

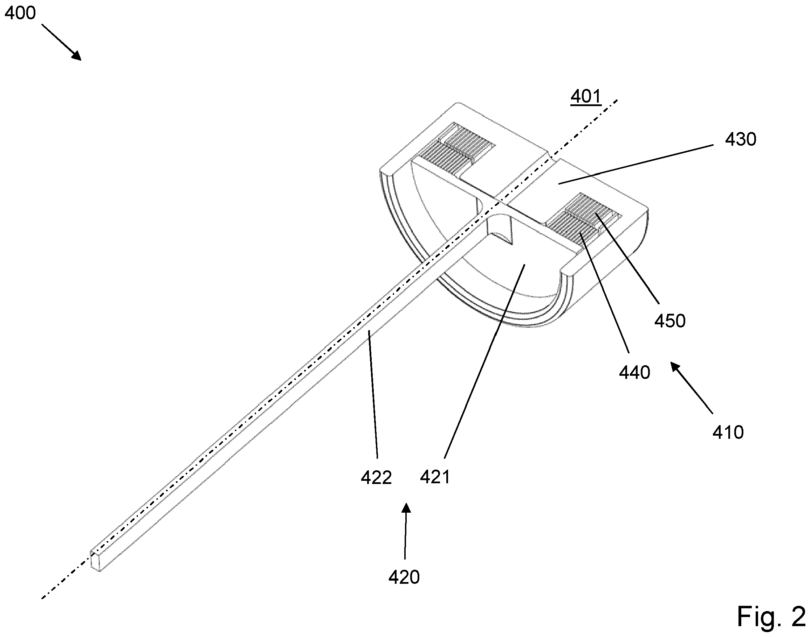

In Fig. 2 ist eine Antrieb-Arbeitskolben-Einheit 400 eines Arbeitsgeräts, beispielsweise des in Fig. 1 gezeigten Arbeitsgeräts 10 dargestellt. Die Antrieb-Arbeitskolben-Einheit 400 ist entlang einer Arbeitsachse 401 längs aufgeschnitten dargestellt und umfasst einen teilweise gezeigten Antrieb 410, einen Arbeitskolben 420 und einen Stator 430. Der Arbeitskolben 420 weist einen Kolbenteller 421 und eine Kolbenstange 422 auf und ist dafür vorgesehen, sich relativ zu dem Stator 430 entlang der Arbeitsachse 401 zu bewegen. Der Antrieb 410 ist dafür vorgesehen, den Arbeitskolben 420 entlang der Arbeitsachse 401 anzutreiben. Hierzu umfasst der Antrieb 410 einen nicht gezeigten Kolbenspulenkondensator und eine an dem Arbeitskolben 420 angeordnete Kolbenspule 440 auf. Die Kolbenspule 440 ist elektrisch mit dem Kolbenspulenkondensator verbindbar, um bei einer Schnellentladung des Kolbenspulenkondensators mit Strom durchflossen zu werden und ein Magnetfeld zu erzeugen, welches eine abstossende Kraft zwischen der Kolbenspule 440 und dem Stator 430 bewirkt und den Arbeitskolben 420 relativ zu dem Stator 430 beschleunigt. Die abstossende Kraft zwischen der Kolbenspule 440 und dem Stator 430 wird beispielsweise dadurch bewirkt, dass das von der Kolbenspule 440 erzeugte Magnetfeld den Stator 430 durchsetzt und in dem Stator 430 einen elektrischen Strom induziert, welcher seinerseits ein Magnetfeld erzeugt, welches dem von der Kolbenspule 440 erzeugten Magnetfeld entgegengesetzt ist. Der Stator 430 besteht dazu aus einem elektrisch leitenden Material, wie beispielsweise Kupfer, Eisen oder eine Legierung davon, welches die Arbeitsachse ringförmig umschliesst. Bei nicht gezeigten Ausführungsbeispielen weist der Stator einen Rahmen und einen an dem Rahmen angeordneten, bevorzugt an dem Rahmen befestigten Ringleiter mit hoher elektrischer Leitfähigkeit auf, welcher die Arbeitsachse ringförmig umschliesst.

Darüber hinaus umfasst der Antrieb 410 einen nicht gezeigten Statorspulenkondensator und eine an dem Arbeitskolben 420 angeordnete Statorspule 450. Die Statorspule 450 ist elektrisch mit dem Statorspulenkondensator verbindbar, um bei einer Schnellentladung des Statorspulenkondensators mit Strom durchflossen zu werden und ein Magnetfeld zu erzeugen, welches eine abstossende Kraft zwischen der Statorspule 450 und dem Arbeitskolben 420 bewirkt und den Arbeitskolben 420 von dem Stator 430 weg beschleunigt. Die abstossende Kraft zwischen der Statorspule 450 und dem Arbeitskolben wird beispielsweise dadurch bewirkt, dass das von der Statorspule 450 erzeugte Magnetfeld dem von der Kolbenspule 440 erzeugten Magnetfeld entgegengesetzt ist. Die Kolbenspule 440 und die Statorspule 450 werden hierzu bevorzugt gegensinnig und zeitlich überlappend, insbesondere gleichzeitig mit elektrischem Strom beaufschlagt, indem der Kolbenspulenkondensator und der Statorspulenkondensator entsprechend zeitlich aufeinander abgestimmt entladen werden, beispielsweise von einer nicht gezeigten Steuereinheit gesteuert. Die Kolbenspule 440 und die Statorspule 450 weisen jeweils eine Kolbenspulenachse beziehungsweise eine Statorspulenachse auf, welche mit der Arbeitsachse 401 zusammenfallen und somit parallel zueinander orientiert sind. Um den Arbeitskolben 420 in die in Fig. 2 gezeigte Ausgangsstellung zurückzubefördern, werden die Kolbenspule 440 und die Statorspule 450 bevorzugt gleichsinnig und zeitlich überlappend, insbesondere gleichzeitig mit elektrischem Strom beaufschlagt, so dass das von der Statorspule 450 erzeugte Magnetfeld und das von der Kolbenspule 440 erzeugte Magnetfeld gleichgerichtet sind. Dadurch wird eine anziehende Kraft zwischen der Statorspule 450 und dem Arbeitskolben 420 bewirkt und der Arbeitskolben 420 auf den Stator 430 zu beschleunigt.

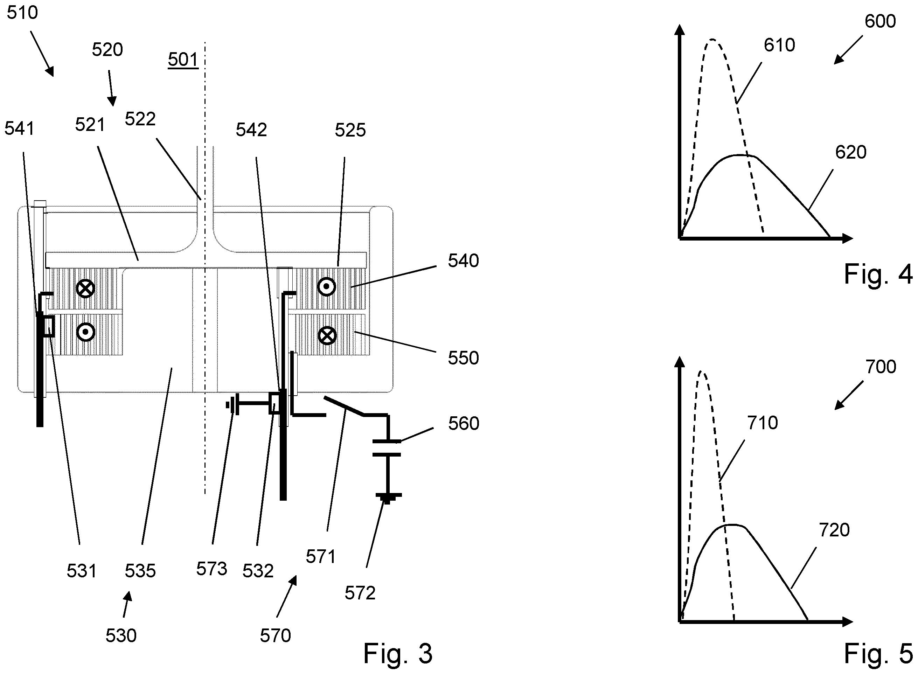

In Fig. 3 ist ein Antrieb 510 eines Arbeitsgeräts, beispielsweise des in Fig. 1 gezeigten Arbeitsgeräts 10 dargestellt. Der Antrieb 510 ist entlang einer Arbeitsachse 501 längs aufgeschnitten dargestellt und ist dafür vorgesehen, einen Arbeitskolben 520 mit einem Kolbenteller 521 und einer Kolbenstange 522 entlang der Arbeitsachse 501 anzutreiben und relativ zu einem Stator 530 zu bewegen. Der Antrieb 510 umfasst einen Kondensator 560, einen Schaltkreislauf 570 mit einem Schalter 571, eine an dem Arbeitskolben 520 angeordnete Kolbenspule 540 und eine an dem Stator 530 angeordnete Statorspule 550. Die Kolbenspule 540 ist elektrisch mit dem Kondensator 560 verbindbar, um bei einer Schnellentladung des Kondensators 560 mit Strom durchflossen zu werden, so dass der Kondensator 560 einen Kolbenspulenkondensator darstellt. Ein Stromfluss durch die Kolbenspule 540 erzeugt dabei ein erstes Magnetfeld. Die Statorspule 550 ist ebenfalls elektrisch mit dem Kondensator 560 verbindbar, um bei einer Schnellentladung des Kondensators 560 mit Strom durchflossen zu werden, so dass der Kondensator 560 auch einen Statorspulenkondensator darstellt. Ein Stromfluss durch die Statorspule 550 erzeugt ein zweites Magnetfeld.

Eine Elektrode des Kondensators 560 ist mit einem Eingang des Schalters 571 elektrisch verbunden und gegenüber einer Gegenelektrode des Kondensators 560 aufladbar, welche mit einem ersten Massepotential 572, beispielsweise dem Minuspol eines elektrischen Akkumulators oder einer Batterie, elektrisch verbunden ist. Ein Ausgang des Schalters 571 ist mit einem Eingang der Statorspule 550 auf einer Innenseite der Statorspule 550 elektrisch verbunden, bevorzugt fest verdrahtet. Ein Ausgang der Statorspule 550 auf einer Aussenseite der Statorspule 550 ist mit einem als Kontaktbürste ausgebildeten ersten elektrischen Statorkontakt 531, welchen der Stator 530 aufweist, elektrisch verbunden, bevorzugt fest verdrahtet. Ein Eingang der Kolbenspule 540 auf einer Aussenseite der Kolbenspule 540 ist mit einem als Kontaktschiene ausgebildeten ersten Kolbenkontakt 541, welchen der Arbeitskolben 520 aufweist, elektrisch verbunden, bevorzugt fest verdrahtet. Der erste Kolbenkontakt 541 gleitet elektrisch leitend an dem ersten Statorkontakt 531 entlang, wenn sich der Arbeitskolben 520 entlang der Arbeitsachse 501 bewegt. Eine nicht gezeigte erste Feder belastet den ersten Statorkontakt 531 auf den ersten Kolbenkontakt 541 zu. Bei nicht gezeigten Ausführungsbeispielen belastet eine Feder zusätzlich oder alternativ den ersten Kolbenkontakt auf den ersten Statorkontakt zu.

Ein Ausgang der Kolbenspule 540 auf einer Innenseite der Kolbenspule 540 ist mit einem als Kontaktschiene ausgebildeten zweiten Kolbenkontakt 542, welchen der Arbeitskolben 520 aufweist, elektrisch verbunden, bevorzugt fest verdrahtet. Der zweite Kolbenkontakt 542 gleitet elektrisch leitend an einem zweiten Statorkontakt 532 entlang, wenn sich der Arbeitskolben 520 entlang der Arbeitsachse 501 bewegt. Der Stator 530 weist den zweiten Statorkontakt 532 auf, welcher als Kontaktbürste ausgebildet und mit einem zweiten Massepotential 573, das vorzugsweise identisch mit dem ersten Massepotential 572 ist, elektrisch verbunden ist. Eine nicht gezeigte zweite Feder belastet den zweiten Statorkontakt 532 auf den zweiten Kolbenkontakt 542 zu. Bei nicht gezeigten Ausführungsbeispielen belastet eine Feder zusätzlich oder alternativ den zweiten Kolbenkontakt auf den zweiten Statorkontakt zu. Die Kolbenkontakte 541, 542 kontaktieren die Statorkontakte 531, 532 nicht notwendigerweise während der gesamten Bewegung des Arbeitskolbens. Bei einigen Anwendungen ist eine Kontaktierung während der ersten 0,5 ms bis 1 ms, insbesondere während der ersten 0,6 ms ausreichend. Die Kolbenkontakte 541, 542 weisen eine Länge in Richtung der Arbeitsachse 501 auf, welche für einige Anwendungsgebiete etwa 10 mm bis 30 mm beträgt.

Die Kolbenkontakte 541, 542 sind starr mit dem übrigen Arbeitskolben 520 verbunden und bewegen sich mit dem übrigen Arbeitskolben 520 mit. Bei nicht gezeigten Ausführungsbeispielen ist der erste und/oder der zweite Statorkontakt als Schleifring ausgebildet. Bei weiteren nicht gezeigten Ausführungsbeispielen ist der erste und/oder der zweite Statorkontakt als Kontaktschiene und der erste beziehungsweise der zweite Kolbenkontakt als Kontaktbürste oder Schleifring ausgebildet. Der zweite Kolbenkontakt 542 und der zweite Statorkontakt 532 sind bezüglich der Arbeitsachse 501 radial innerhalb der Statorspule 550 und der Kolbenspule 540 angeordnet. Bei nicht gezeigten Ausführungsbeispielen sind zusätzlich oder alternativ der erste Kolbenkontakt und der erste Statorkontakt radial innerhalb der Statorspule und/oder der Kolbenspule angeordnet.

Die Schnellentladung des Kondensators 560 über die Kolbenspule 540 und die Statorspule 550 ist mittels des Schaltkreislaufs 570 auslösbar, indem der Schalter 571 bei elektrisch aufgeladenem Kondensator 560 geschlossen und die Kolbenspule 540 und die Statorspule 550 elektrisch mit dem Kondensator 560 verbunden werden. Der elektrische Strom fliesst dann von dem Kondensator 560 durch den Schalter 571, von innen nach aussen durch die Statorspule 550, durch den ersten Statorkontakt 531 und den ersten Kolbenkontakt 541, von aussen nach innen durch die Kolbenspule 540 und schliesslich durch den zweiten Kolbenkontakt 542 und den zweiten Statorkontakt 532 zum zweiten Massepotential 573.

Die Kolbenspule 540 und die Statorspule 550 weisen jeweils eine Kolbenspulenachse beziehungsweise eine Statorspulenachse auf, welche mit der Arbeitsachse 501 zusammenfallen und somit parallel zueinander orientiert sind. Die Kolbenspule 540 und die Statorspule 550 sind gleichsinnig gewickelt und werden gegensinnig von dem elektrischen Strom durchflossen, so dass das erste Magnetfeld und das zweite Magnetfeld zueinander entgegengesetzt sind. Bei nicht gezeigten Ausführungsbeispielen sind die Spulen gegensinnig gewickelt und werden gleichsinnig von dem elektrischen Strom durchflossen. Dadurch wird eine abstossende Kraft zwischen der Statorspule 550 und der Kolbenspule 540 und somit zwischen dem Stator 530 und dem Arbeitskolben 520 bewirkt, so dass der Arbeitskolben 520 relativ zu dem Stator 530 beschleunigt wird. Die Kolbenspule 540 und die Statorspule 550 sind elektrisch seriell zueinander verschaltet, werden also gleichzeitig von elektrischem Strom durchflossen, wobei eine Stromstärke des durch die Spulen 540, 550 fliessenden Stroms für die Kolbenspule 540 und die Statorspule 550 gleich ist. Vorzugsweise weisen die Kolbenspule 540 und die Statorspule 550 darüber hinaus gleich viele Spulenwindungen auf, so dass die von den Spulen 540, 550 erzeugten Magnetfelder gleich stark sind.

Der Arbeitskolben 520 weist einen Kolbenrahmen 525 auf, welcher vorzugsweise aus einem weichmagnetischen Material besteht, wie beispielsweise Eisen oder eine Legierung davon, beispielsweise Stahl. Der Kolbenrahmen 525 umgibt die Kolbenspule 540 und erstreckt sich bezüglich der Arbeitsachse 501 in einer umlaufenden Richtung. Dadurch wird das von der Kolbenspule 540 erzeugte zweite Magnetfeld im Bereich der Statorspule 550 verstärkt und die abstossende Kraft zwischen dem Stator 530 und dem Arbeitskolben 520 erhöht. Bevorzugt besteht der Kolbenteller 521 aus dem weichmagnetischen Material und bildet besonders bevorzugt den Kolbenrahmen. Ebenfalls bevorzugt besteht die Kolbenstange 522 aus dem weichmagnetischen Material und ist besonders bevorzugt einstückig mit dem Kolbenteller 521 verbunden, wodurch unter Umständen eine Steifigkeit und/oder mechanische Robustheit des Arbeitskolbens 520 erhöht ist. Der Stator 530 weist einen Statorrahmen 535 auf, welcher vorzugsweise aus einem weichmagnetischen Material besteht, wie beispielsweise Eisen oder eine Legierung davon, beispielsweise Stahl. Der Statorrahmen 535 umgibt die Statorspule 550 und erstreckt sich bezüglich der Arbeitsachse 501 in einer umlaufenden Richtung. Dadurch wird das von der Statorspule 550 erzeugte zweite Magnetfeld im Bereich der Kolbenspule 540 verstärkt und die abstossende Kraft zwischen dem Stator 530 und dem Arbeitskolben 520 erhöht.

In Fig. 4 ist eine Auftragung 600 einer von einem Antrieb auf einen Arbeitskolben übertragenen Antriebskraft über eine Zeit dargestellt. Ein Kraftverlauf 610 entspricht einem Antrieb mit einer an dem Arbeitskolben angeordneten Kolbenspule, welche ein Magnetfeld erzeugt, das in einem Stator oder einer vorzugsweise kurzgeschlossenen Statorspule ein gegensinniges Magnetfeld induziert. Eine Kraft wird während einer relativ kurzen Zeit übertragen. Um dennoch eine gewünschte Geschwindigkeit des Arbeitskolbens zu erreichen, ist eine relativ grosse Maximalkraft zu übertragen. Ein Kraftverlauf 620 entspricht einem Antrieb mit einer an dem Arbeitskolben angeordneten Kolbenspule, welche ein erstes Magnetfeld erzeugt, und einer an einem Stator angeordneten Statorspule, welche ein zu dem ersten Magnetfeld gegensinniges zweites Magnetfeld erzeugt. Eine Kraft wird während einer relativ langen Zeit übertragen. Um die gewünschte Geschwindigkeit des Arbeitskolbens zu erreichen, ist eine relativ kleine Maximalkraft ausreichend. Eine Fläche unter der Kurve des Kraftverlaufs 610, 620 ist dabei ein Mass für einen Impuls des Arbeitskolbens. Bei gleichem Impuls und somit, gleiche Kolbenmasse vorausgesetzt, gleicher Geschwindigkeit des Arbeitskolbens, also auch bei gleicher kinetischer Energie des Arbeitskolbens, ist die Fläche unter beiden Kurven gleich gross. Eine kleinere Maximalkraft hat den Vorteil, dass eine Belastung des Antriebs und eines den Antrieb aufweisenden Arbeitsgeräts reduziert ist.

In Fig. 5 ist eine Auftragung 700 einer von einem Antrieb auf einen Arbeitskolben übertragenen Antriebskraft über einen Weg des Arbeitskolbens entlang einer Arbeitsachse dargestellt. Ein Kraftverlauf 710 entspricht einem Antrieb mit einer an dem Arbeitskolben angeordneten Kolbenspule, welche ein Magnetfeld erzeugt, das in einem Stator ein gegensinniges Magnetfeld induziert. Eine Kraft wird während eines relativ kurzen Weges übertragen. Um dennoch eine gewünschte kinetische Energie des Arbeitskolbens zu erreichen, ist eine relativ grosse Maximalkraft zu übertragen. Ein Kraftverlauf 720 entspricht einem Antrieb mit einer an dem Arbeitskolben angeordneten Kolbenspule, welche ein erstes Magnetfeld erzeugt, und einer an einem Stator angeordneten Statorspule, welche ein zu dem ersten Magnetfeld gegensinniges zweites Magnetfeld erzeugt. Eine Kraft wird während eines relativ langen Weges übertragen. Um die gewünschte kinetische Energie des Arbeitskolbens zu erreichen, ist eine relativ kleine Maximalkraft ausreichend. Eine Fläche unter der Kurve des Kraftverlaufs 710, 720 ist dabei ein Mass für die kinetische Energie des Arbeitskolbens. Bei gleicher kinetischer Energie des Arbeitskolbens ist also die Fläche unter beiden Kurven gleich gross.

Eine kleinere Maximalkraft hat den Vorteil, dass eine Belastung des Antriebs und eines den Antrieb aufweisenden Arbeitsgeräts reduziert ist. Ausserdem ist eine maximale Stromstärke reduziert, so dass unter Umständen günstigere elektronische Bauelemente für die Verschaltung der Spulen verwendbar sind. Weiterhin ist eine elektromagnetische Belastung eines Benutzers des Arbeitsgeräts reduziert, so dass eine leichte und/oder günstige Abschirmung unter Umständen ausreichend ist. Darüber hinaus ist ein Wirkungsgrad bei dem Antrieb mit einer Kolbenspule und einer Statorspule unter Umständen höher als bei dem Antrieb mit nur einer Spule, so dass auch eine abzuführende Abwärme reduziert ist. Im Übrigen ist es vorteilhaft, den Stromfluss durch die Spulen abzuschalten, beispielsweise durch Kurzschliessen, wenn die übertragene Kraft sehr klein wird. Dadurch werden unter Umständen unerwünschte elektrische Überschläge und/oder Funken zwischen den aneinander gleitenden elektrischen Kontakten reduziert oder vermieden.

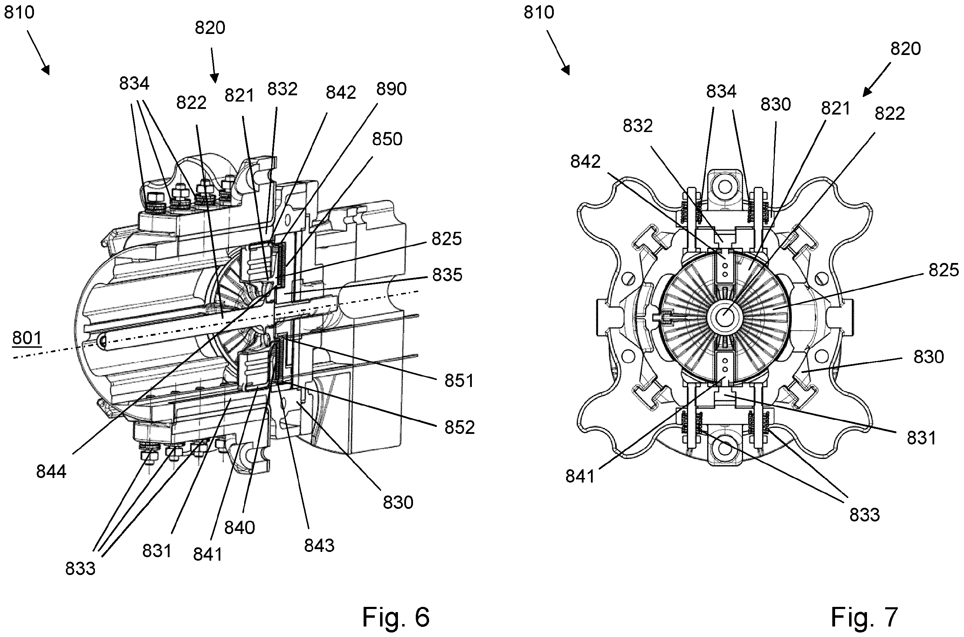

In den Fig. 6-7 ist ein Antrieb 810 eines Arbeitsgeräts, beispielsweise des in Fig. 1 gezeigten Arbeitsgeräts 10 dargestellt. Fig. 6 zeigt einen perspektivischen Längsschnitt entlang einer Arbeitsachse 801 und Fig. 7 eine Aufsicht in Richtung der Arbeitsachse 801 (in Fig. 6 von links). Der Antrieb 810 ist dafür vorgesehen, einen Arbeitskolben 820 mit einem Kolbenteller 821 und einer Kolbenstange 822 entlang der Arbeitsachse 801 anzutreiben und relativ zu einem Stator 830 zu bewegen. Der Antrieb 810 umfasst eine an dem Arbeitskolben 820 angeordnete Kolbenspule 840 und eine an dem Stator 830 angeordnete Statorspule 850. Die Kolbenspule 840 und die Statorspule 550 sind elektrisch mit einem nicht gezeigten Kondensator verbindbar, um bei einer Schnellentladung des Kondensators mit Strom durchflossen zu werden.

Die Statorspule 850 weist dazu einen Eingang 851 an einem bezüglich der Arbeitsachse 801 radial inneren Umfang der Statorspule 850 auf. Ein Ausgang 852 der Statorspule 850 an einem bezüglich der Arbeitsachse 801 radial äusseren Umfang der Statorspule 850 ist mit einem als Kontaktschiene ausgebildeten ersten elektrischen Statorkontakt 831, welchen der Stator 830 aufweist, elektrisch verbunden. Ein Eingang 843 der Kolbenspule 840 an einem bezüglich der Arbeitsachse 801 radial äusseren Umfang der Kolbenspule 840 ist mit einem als Kontaktbürste ausgebildeten ersten Kolbenkontakt 841, welchen der Arbeitskolben 820 an einem bezüglich der Arbeitsachse 801 radial äusseren Umfang aufweist, elektrisch verbunden. Der erste elektrische Kolbenkontakt 841 ist bezüglich der Arbeitsachse 801 radial ausserhalb eines äusseren Umfangs der Kolbenspule 840 und axial vor der Kolbenspule 840 und/oder vor dem Stator 830 angeordnet. Der erste Kolbenkontakt 841 gleitet elektrisch leitend an dem ersten Statorkontakt 831 entlang, wenn sich der Arbeitskolben 820 entlang der Arbeitsachse 801 bewegt. Mehrere erste Federn 833 belasten den ersten Statorkontakt 831 auf den ersten Kolbenkontakt 841 zu.

Ein Ausgang 844 der Kolbenspule 840 an einem bezüglich der Arbeitsachse 801 radial inneren Umfang der Kolbenspule 840 ist mit einem als Kontaktschiene ausgebildeten zweiten Kolbenkontakt 842, welchen der Arbeitskolben 820 an dem bezüglich der Arbeitsachse 801 radial äusseren Umfang aufweist, elektrisch verbunden. Der zweite Kolbenkontakt 842 gleitet elektrisch leitend an einem zweiten Statorkontakt 832 entlang, wenn sich der Arbeitskolben 820 entlang der Arbeitsachse 801 bewegt. Der Stator 830 weist den zweiten Statorkontakt 832 auf, welcher als Kontaktbürste ausgebildet und mit einem nicht gezeigten Massepotential elektrisch verbunden ist. Mehrere zweite Federn 834 belasten den zweiten Statorkontakt 832 auf den zweiten Kolbenkontakt 842 zu. Die Kolbenkontakte 841, 842 kontaktieren die Statorkontakte 831, 832 während der gesamten Bewegung des Arbeitskolbens 820. Die Kolbenkontakte 841, 842 sind starr mit dem übrigen Arbeitskolben 820 verbunden und bewegen sich mit dem übrigen Arbeitskolben 820 mit.

Der Arbeitskolben 820 weist einen Kolbenrahmen 825 auf, welcher vorzugsweise aus einem weichmagnetischen Material besteht, wie beispielsweise Eisen oder eine Legierung davon, beispielsweise Stahl. Der Kolbenrahmen 825 umgibt die Kolbenspule 840 und erstreckt sich bezüglich der Arbeitsachse 801 in einer umlaufenden Richtung. Bevorzugt besteht der Kolbenteller 821 aus dem weichmagnetischen Material. Der Stator 830 weist einen Statorrahmen 835 auf, welcher vorzugsweise aus einem weichmagnetischen Material besteht, wie beispielsweise Eisen oder eine Legierung davon, beispielsweise Stahl. Der Statorrahmen 835 umgibt die Statorspule 850 und erstreckt sich bezüglich der Arbeitsachse 801 in einer umlaufenden Richtung.

Der Stator 830 und der Statorrahmen 835 weisen eine Vertiefung 890 auf, in welche der Arbeitskolben 820 in der in Fig. 6 gezeigten Startposition eintaucht. Die Statorspule 850 ist in der Startposition des Arbeitskolbens 820 vollständig in der Vertiefung 890 angeordnet. Die Kolbenkontakte 841, 842 sind in der Startposition des Arbeitskolbens 820 sowie während der gesamten Bewegung des Arbeitskolbens 820 ausserhalb der Vertiefung 890, bevorzugt in Richtung der Arbeitsachse 801 vor dem Stator 830 angeordnet. Der radial äussere Umfang des Arbeitskolbens 820, an dem sich die Kolbenkontakte 841, 842 befinden, ist dabei grösser als der radial äussere Umfang der Kolbenspule 840 und/oder kleiner als ein bezüglich der Arbeitsachse 801 radial äusserer Umfang des Stators 830 oder des Statorrahmens 835.

Die Erfindung wurde anhand einer Reihe von in den Zeichnungen dargestellten und nicht dargestellten Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass das erfindungsgemässe Arbeitsgerät auch für andere Anwendungen einsetzbar ist, beispielsweise als Bohrhammer oder dergleichen.

## Patentansprüche

1. Arbeitsgerät zum Bearbeiten eines Untergrunds, aufweisend einen Stator (430) und einen Arbeitskolben (420), welcher dafür vorgesehen ist, sich relativ zu dem Stator (430) entlang einer Arbeitsachse zu bewegen, weiterhin aufweisend einen Antrieb (410), welcher dafür vorgesehen ist, den Arbeitskolben (420) entlang der Arbeitsachse von einer Startposition aus auf den Untergrund zu anzutreiben, wobei der Stator (430) einen ersten elektrischen Statorkontakt (531) aufweist **dadurch gekennzeichnet, dass** der Arbeitskolben (420) einen an dem ersten elektrischen Statorkontakt (531) gleitenden ersten elektrischen Kolbenkontakt (541) aufweist, welcher an einem bezüglich der Arbeitsachse radial äusseren Umfang des Arbeitskolbens (420) angeordnet ist, und wobei der Antrieb (410) eine an dem Arbeitskolben (420) angeordnete Kolbenspule (440) aufweist, welche dafür vorgesehen ist, mittels des ersten elektrischen Statorkontakts (531) und des ersten elektrischen Kolbenkontakts (541) mit Strom durchflossen zu werden und ein Magnetfeld zu erzeugen.

2. Arbeitsgerät nach Anspruch 1, wobei der Stator (430) einen zweiten elektrischen Statorkontakt (532) aufweist und der Arbeitskolben (420) einen an dem zweiten elektrischen Statorkontakt (532) gleitenden zweiten elektrischen Kolbenkontakt (542) aufweist, welcher an einem bezüglich der Arbeitsachse radial äusseren Umfang des Arbeitskolbens (420) angeordnet ist.

3. Arbeitsgerät nach einem der vorhergehenden Ansprüche, wobei der Antrieb (410) einen Kondensator (300) aufweist.

4. Arbeitsgerät nach Anspruch 3, wobei die Kolbenspule (440) mittels des ersten elektrischen Statorkontakts (531) und des ersten elektrischen Kolbenkontakts (541) elektrisch mit dem Kondensator (300) verbindbar ist, um bei einer Schnellentladung des Kondensators (300) mit Strom durchflossen zu werden und das Magnetfeld zu erzeugen, welches den Arbeitskolben (420) relativ zu dem Stator (430) beschleunigt und insbesondere den Stator (430) abstösst.

5. Arbeitsgerät nach einem der vorhergehenden Ansprüche, wobei der Antrieb (410) eine an dem Stator (430) angeordnete Statorspule (450) aufweist, welche elektrisch mit dem Kondensator (300) verbindbar ist, um bei einer Schnellentladung des Kondensators (300) mit Strom durchflossen zu werden und ein Magnetfeld zu erzeugen, welches den Arbeitskolben (420) relativ zu dem Stator (430) beschleunigt und insbesondere den Arbeitskolben (420) abstösst.

6. Arbeitsgerät nach den Ansprüchen 4 und 5, wobei die Kolbenspule (440) eine Kolbenspulenachse aufweist und die Statorspule (450) eine Statorspulenachse aufweist, welche parallel zur Kolbenspulenachse orientiert ist und insbesondere mit der Kolbenspulenachse zusammenfällt.

7. Arbeitsgerät nach Anspruch 6, wobei die Kolbenspule (440) und die Statorspule (450) bei der Schnellentladung des Kondensators (300) gegensinnig mit Strom durchflossen werden, um einander entgegengesetzte Magnetfelder zu erzeugen.

8. Arbeitsgerät nach einem der vorhergehenden Ansprüche, wobei der Stator (430) eine Vertiefung (890) aufweist, in welche der Arbeitskolben (420) in der Startposition eintaucht, wobei die Statorspule (450) in der Startposition des Arbeitskolbens (420) teilweise oder vollständig in der Vertiefung (890) angeordnet ist.

9. Arbeitsgerät nach Anspruch 8, wobei der erste elektrische Kolbenkontakt (541) in der Startposition des Arbeitskolbens (420) ausserhalb der Vertiefung (890) angeordnet ist.

10. Arbeitsgerät nach einem der vorhergehenden Ansprüche, wobei der erste elektrische Kolbenkontakt (541) bezüglich der Arbeitsachse radial ausserhalb eines äusseren Umfangs der Kolbenspule (440) angeordnet ist.

11. Arbeitsgerät nach einem der vorhergehenden Ansprüche, wobei der erste elektrische Kolbenkontakt (541) bezüglich der Arbeitsachse axial vor der Kolbenspule (440) und/oder vor dem Stator (430) angeordnet ist.

12. Arbeitsgerät nach einem der vorhergehenden Ansprüche, wobei der Antrieb (410) eine erste Feder (833) aufweist, welche den ersten Statorkontakt (531) auf den ersten Kolbenkontakt (541) zu oder den ersten Kolbenkontakt (541) auf den ersten Statorkontakt (531) zu belastet.

13. Arbeitsgerät nach einem der vorhergehenden Ansprüche, wobei der Antrieb (410) eine zweite Feder (834) aufweist, welche den zweiten Statorkontakt (532) auf den zweiten Kolbenkontakt (542) zu oder den zweiten Kolbenkontakt (542) auf den zweiten Statorkontakt (532) zu belastet.

14. Arbeitsgerät nach einem der vorhergehenden Ansprüche, aufweisend eine Aufnahme (20), welche dafür vorgesehen ist, ein Befestigungselement aufzunehmen, wobei der Arbeitskolben (420) oder der Stator (430) dafür vorgesehen ist, ein in der Aufnahme (20) aufgenommenes Befestigungselement entlang der Arbeitsachse in den Untergrund zu befördern.

## Claims

1. Working implement for working a substrate, having a stator (430) and a working piston (420) which is provided to move along a working axis relative to the stator (430), furthermore having a drive (410) which is provided to drive the working piston (420) along the working axis so as to proceed from a starting position towards the substrate, wherein the stator (430) has a first electrical stator contact (531), **characterized in that** the working piston (420) has a first electrical piston contact (541) which slides on the first electrical stator contact (531) and is disposed on a radially outer circumference of the working piston (420) in terms of the working axis, and wherein the drive (410) has a piston coil (440) which is disposed on the working piston (420) and, by means of the first electrical stator contact (531) and the first electrical piston contact (541), is provided to be passed through by a current and to generate a magnetic field.

2. Working implement according to Claim 1, wherein the stator (430) has a second electrical stator contact (532), and the working piston (420) has a second electrical piston contact (542) which slides on the second electrical stator contact (532) and is disposed on a radially outer circumference of the working piston (420) in terms of the working axis.

3. Working implement according to one of the preceding claims, wherein the drive (410) has a capacitor (300).

4. Working implement according to Claim 3, wherein the piston coil (440), by means of the first electrical stator contact (531) and the first electrical piston contact (541), is electrically connectable to the capacitor (300) so as to be passed through by a current and to generate the magnetic field in a rapid discharge of the capacitor (300), said magnetic field accelerating the working piston (420) relative to the stator (430) and in particular repelling the stator (430).

5. Working implement according to one of the preceding claims, wherein the drive (410) has a stator coil (450) which is disposed on the stator (430) and is electrically connectable to the capacitor (300) so as to be passed through by a current and to generate a magnetic field in a rapid discharge of the capacitor (300), said magnetic field accelerating the working piston (420) relative to the stator (430) and in particular repelling the working piston (420).

6. Working implement according to Claims 4 and 5, wherein the piston coil (440) has a piston coil axis, and the stator coil (450) has a stator coil axis which is oriented parallel to the piston coil axis and in particular coincides with the piston coil axis.

7. Working implement according to Claim 6, wherein the piston coil (440) and the stator coil (450) in the rapid discharge of the capacitor (300) are passed through by currents in opposite directions so as to generate mutually opposed magnetic fields.

8. Working implement according to one of the preceding claims, wherein the stator (430) has a depression (890) into which the working piston (420) plunges in the starting position, wherein the stator coil (450) in the starting position of the working piston (420) is disposed partially or completely in the depression (890).

9. Working implement according to Claim 8, wherein the first electrical piston contact (541) in the starting position of the working piston (420) is disposed outside the depression (890).

10. Working implement according to one of the preceding claims, wherein the first electrical piston contact (541) in terms of the working axis is disposed radially outside an outer circumference of the piston coil (440).

11. Working implement according to one of the preceding claims, wherein the first electrical piston contact (541) in terms of the working axis is disposed axially in front of the piston coil (440) and/or in front of the stator (430).

12. Working implement according to one of the preceding claims, wherein the drive (410) has a first spring (833) which loads the first stator contact (531) towards the first piston contact (541), or the first piston contact (541) towards the first stator contact (531).

13. Working implement according to one of the preceding claims, wherein the drive (410) has a second spring (834) which loads the second stator contact (532) towards the second piston contact (542), or the second piston contact (542) towards the second stator contact (532).

14. Working implement according to one of the preceding claims, having a receptacle (20) which is provided to receive a fastening element, wherein the working piston (420) or the stator (430) is provided to convey a fastening element received in the receptacle (20) along the working axis into the substrate.

## Revendications

1. Appareil de travail servant à traiter un substrat, présentant un stator (430) et un piston de travail (420), lequel est destiné à se déplacer par rapport au stator (430) le long d'un axe de travail, présentant en outre un entraînement (410), lequel est destiné à entraîner le piston de travail (420) le long de l'axe de travail à partir d'une position de départ vers le substrat, le stator (430) présentant un premier contact de stator électrique (531),
**caractérisé en ce que** le piston de travail (420) présente un premier contact de piston électrique (541) glissant sur le premier contact de stator électrique (531), lequel premier contact de piston électrique est disposé sur une périphérie, radialement extérieure par rapport à l'axe de travail, du piston de travail (420), et l'entraînement (410) présentant une bobine de piston (440) disposée sur le piston de travail (420), laquelle est destinée à être traversée par un courant au moyen du premier contact de stator électrique (531) et du premier contact de piston électrique (541) et à générer un champ magnétique.

2. Appareil de travail selon la revendication 1, le stator (430) présentant un deuxième contact de stator électrique (532) et le piston de travail (420) présentant un deuxième contact de piston électrique (542) glissant sur le deuxième contact de stator électrique (532), lequel deuxième contact de piston électrique est disposé sur une périphérie, radialement extérieure par rapport à l'axe de travail, du piston de travail (420).

3. Appareil de travail selon l'une des revendications précédentes, l'entraînement (410) présentant un condensateur (300).

4. Appareil de travail selon la revendication 3, la bobine de piston (440) pouvant être connectée électriquement au condensateur (300) au moyen du premier contact de stator électrique (531) et du premier contact de piston électrique (541), afin d'être traversée par un courant lors d'une décharge rapide du condensateur (300) et de générer le champ magnétique, lequel accélère le piston de travail (420) par rapport au stator (430) et repousse en particulier le stator (430).

5. Appareil de travail selon l'une des revendications précédentes, l'entraînement (410) présentant une bobine de stator (450) disposée sur le stator (430), laquelle peut être connectée électriquement au condensateur (300), afin d'être traversée par un courant lors d'une décharge rapide du condensateur (300) et de générer un champ magnétique, lequel accélère le piston de travail (420) par rapport au stator (430) et repousse en particulier le piston de travail (420).

6. Appareil de travail selon les revendications 4 et 5, la bobine de piston (440) présentant un axe de bobine de piston et la bobine de stator (450) présentant un axe de bobine de stator, lequel est orienté parallèlement à l'axe de bobine de piston et coïncide en particulier avec l'axe de bobine de piston.

7. Appareil de travail selon la revendication 6, la bobine de piston (440) et la bobine de stator (450) étant traversées par un courant en sens inverse lors de la décharge rapide du condensateur (300), afin de générer des champs magnétiques opposés l'un à l'autre.

8. Appareil de travail selon l'une des revendications précédentes, le stator (430) présentant un évidement (890), dans lequel le piston de travail (420) pénètre dans la position de départ, la bobine de stator (450) étant disposée partiellement ou complètement dans l'évidement (890) dans la position de départ du piston de travail (420).

9. Appareil de travail selon la revendication 8, le premier contact de piston électrique (541) étant disposé à l'extérieur de l'évidement (890) dans la position de départ du piston de travail (420).

10. Appareil de travail selon l'une des revendications précédentes, le premier contact de piston électrique (541) étant disposé radialement à l'extérieur d'une périphérie extérieure de la bobine de piston (440) par rapport à l'axe de travail.

11. Appareil de travail selon l'une des revendications précédentes, le premier contact de piston électrique (541) étant disposé axialement devant la bobine de piston (440) et/ou devant le stator (430) par rapport à l'axe de travail.

12. Appareil de travail selon l'une des revendications précédentes, l'entraînement (410) présentant un premier ressort (833), lequel sollicite le premier contact de stator (531) vers le premier contact de piston (541) ou le premier contact de piston (541) vers le premier contact de stator (531).

13. Appareil de travail selon l'une des revendications précédentes, l'entraînement (410) présentant un deuxième ressort (834), lequel sollicite le deuxième contact de stator (532) vers le deuxième contact de piston (542) ou le deuxième contact de piston (542) vers le deuxième contact de stator (532).

14. Appareil de travail selon l'une des revendications précédentes, présentant un logement (20), lequel est destiné à recevoir un élément de fixation, le piston de travail (420) ou le stator (430) étant destiné à acheminer un élément de fixation reçu dans le logement (20) dans le substrat le long de l'axe de travail.
